# FASCICULE DE BREVET EUROPEEN

(11) **EP 2 269 487 B1**
(45) Date de publication et mention de la délivrance du brevet: **17.04.2013**
(21) Numéro de dépôt: 10305718.8
(22) Date de dépôt: 01.07.2010
(51) Int. Cl.: A47J 27/09

(54) **Autocuiseur avec soupape anti-emulsion**
Schnellkochtopf mit Anti-Emulsion Ventil
Pressure cooker with anti-emulsion valve

(30) Priorité: 03.07.2009 FR 0954628
(43) Date de publication de la demande: 05.01.2011
(73) Titulaire: SEB S.A., 69130 Ecully (FR)
(72) Inventeur: Cohade, Guillaume, 21000 Dijon (FR); Chameroy, Eric, 21260 Véronnes (FR)
(74) Mandataire: Martin, Didier Roland Valéry

(56) Documents cités:
- EP-A- 1 844 686
- DE-U1-202007 003 676
- FR-A- 2 445 714

## Description

La présente invention se rapporte au domaine général des appareils de cuisson sous pression, du genre autocuiseurs domestiques.

La présente invention concerne plus particulièrement un appareil de cuisson d'aliments sous pression comprenant une cuve ainsi qu'un couvercle conçu pour être fixé sur ladite cuve de sorte à définir une enceinte de cuisson destinée à contenir les aliments, ledit appareil comprenant :
- un moyen de décompression activable conçu pour, lorsqu'il est activé, adopter une configuration d'ouverture dans laquelle il assure la communication entre l'intérieur de l'enceinte et l'extérieur de l'appareil à travers un circuit d'échappement pour permettre la décompression dudit appareil,
- un moyen de commande conçu pour être actionné par l'utilisateur afin de contrôler l'activation du moyen de décompression.

De façon bien connue, les appareils domestiques de cuisson d'aliments sous pression sont pourvus de moyens de décompression destinés à évacuer la vapeur contenue dans l'enceinte à la fin de la cuisson, afin de permettre l'ouverture du couvercle et la récupération des aliments.

A cet effet, les moyens de décompression comportent généralement un clapet monté mobile par rapport à un siège qui met en communication l'intérieur de l'enceinte avec l'extérieur de l'appareil. Le clapet est généralement placé sous contrôle d'un mécanisme de déclenchement adapté, tel qu'une poignée de manoeuvre.

S'ils donnent généralement satisfaction, les moyens de décompression connus souffrent parfois de certains inconvénients.

En premier lieu, la décompression est parfois lente, ce qui contraint l'utilisateur à patienter avant de pouvoir obtenir la purge complète de l'appareil nécessaire à l'ouverture de ce dernier.

En outre, les inventeurs ont constaté que si l'on cherchait à augmenter les dimensions de l'orifice d'échappement, ceci permettait effectivement d'accélérer la décompression mais avait également pour effet d'entraîner une brutale chute de pression dans l'enceinte, laquelle provoquait l'ébullition de l'eau liquide encore contenue dans les aliments.

Or, une telle mise en ébullition brutale provoque généralement une véritable pulvérisation des aliments tendres, tel que les carottes par exemple, de telle sorte que de nombreux débris d'aliments sont chassés à travers l'orifice d'échappement et projetés tout autour de l'appareil de cuisson, ce qui bien entendu est préjudiciable à la sécurité de l'utilisateur d'une part et à la propreté de l'appareil et de son environnement d'autre part.

Les objets assignés à l'invention visent par conséquent à remédier aux inconvénients susmentionnés et à proposer un nouvel appareil de cuisson d'aliments sous pression dont la décompression soit optimisée.

Un autre objet assigné à l'invention vise à proposer un nouvel appareil de cuisson d'aliments sous pression qui évite l'apparition d'un phénomène d'émulsion des aliments tendres lors de la décompression.

Un autre objet assigné à l'invention vise à proposer un nouvel appareil de cuisson particulièrement ergonomique et dont le fonctionnement soit simple, intuitif, et contrôlable par l'utilisateur.

Un autre objet assigné à l'invention vise à proposer un nouvel appareil de cuisson qui présente une structure simple, compacte, et qui soit peu onéreux à fabriquer.

Un autre objet assigné à l'invention vise à proposer un nouvel appareil de cuisson qui présente une fiabilité et une robustesse accrues.

Les objets assignés à l'invention sont atteints à l'aide d'un appareil de cuisson d'aliments sous pression comprenant une cuve ainsi qu'un couvercle conçu pour être fixé sur ladite cuve de sorte à définir une enceinte de cuisson destinée à contenir les aliments, ledit appareil comprenant :
- un moyen de décompression activable conçu pour, lorsqu'il est activé, adopter une configuration d'ouverture dans laquelle il assure la communication entre l'intérieur de l'enceinte et l'extérieur de l'appareil à travers un circuit d'échappement pour permettre la décompression dudit appareil,
- un moyen de commande conçu pour être actionné par l'utilisateur afin de contrôler l'activation du moyen de décompression,
ledit appareil étant **caractérisé en ce qu**'il comporte un moyen de régulation de débit de fuite conçu pour coopérer avec le moyen de décompression, lorsque ce dernier se trouve en configuration d'ouverture, afin d'augmenter automatiquement la capacité d'écoulement du circuit d'échappement lorsque la pression régnant dans l'enceinte décroît.

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :
- La figure 1 représente les courbes de décompression correspondant à l'évolution de la pression régnant dans l'enceinte de cuisson en fonction du temps, lorsque le moyen de décompression se trouve en configuration d'ouverture, pour des autocuiseurs connus d'une part et pour un appareil de cuisson conforme à l'invention d'autre part.
- La figure 2 représente, selon une vue en perspective, une variante de réalisation de moyens de régulation de débit de fuite conformes à l'invention.
- La figure 3 représente le moyen de régulation de la figure 2 selon une vue en perspective avec arrachement de matière.
- La figure 4 illustre, selon une vue de détail en coupe, une variante de réalisation d'appareil de cuisson conforme à l'invention, pendant la phase de cuisson des aliments, ledit appareil comportant une soupape de régulation de sa pression de fonctionnement qui coopère avec un organe de régulation de débit de fuite tel qu'illustré sur les figures 2 et 3.
- La figure 5 illustre, selon une vue de détail en coupe, l'appareil de la figure 4 au début du cycle de décompression.
- La figure 6 illustre, selon une vue de détail en coupe, l'appareil des figures 4 et 5 en fin de cycle de décompression.
- Les figures 7 et 8 illustrent, selon des vues en perspective, une autre variante de réalisation de moyens de régulation de débit conformes à l'invention.
- Les figures 9, 10 et 11 représentent, selon des vues de détail en coupe, la mise en oeuvre des moyens de régulation de débit représentés sur les figures 7 et 8, respectivement pendant la cuisson, lors du déclenchement de la décompression, et en fin de décompression.
- Les figures 12, 13 et 14 illustrent, selon des vues de détail en coupe, une autre variante de réalisation d'appareil de cuisson conforme à l'invention, respectivement dans une première configuration de régulation de cuisson correspondant à une pression de fonctionnement élevée, dans une seconde configuration de régulation de cuisson à une pression de fonctionnement moindre, et en cours de décompression.
- Les figures 15, 16 et 17 représentent, selon des vues de détail en coupe, une variante de réalisation d'appareil conforme à l'invention, respectivement en configuration de cuisson, en début de décompression, et en fin de décompression.

La présente invention concerne un appareil de cuisson 1 d'aliments sous pression, et plus particulièrement un appareil de cuisson domestique du genre autocuiseur.

Ledit appareil 1 comprend à cet effet une cuve (non représentée) ainsi qu'un couvercle 2 conçu pour être fixé sur ladite cuve de sorte à définir une enceinte de cuisson 3 qui est destinée à contenir les aliments.

Avantageusement, le couvercle 2 est destiné à être rapporté et verrouillé sur la cuve au moyen d'organes de verrouillage appropriés, par exemple de type baïonnettes, étriers, ou mâchoires, afin de former une enceinte 3 sensiblement étanche.

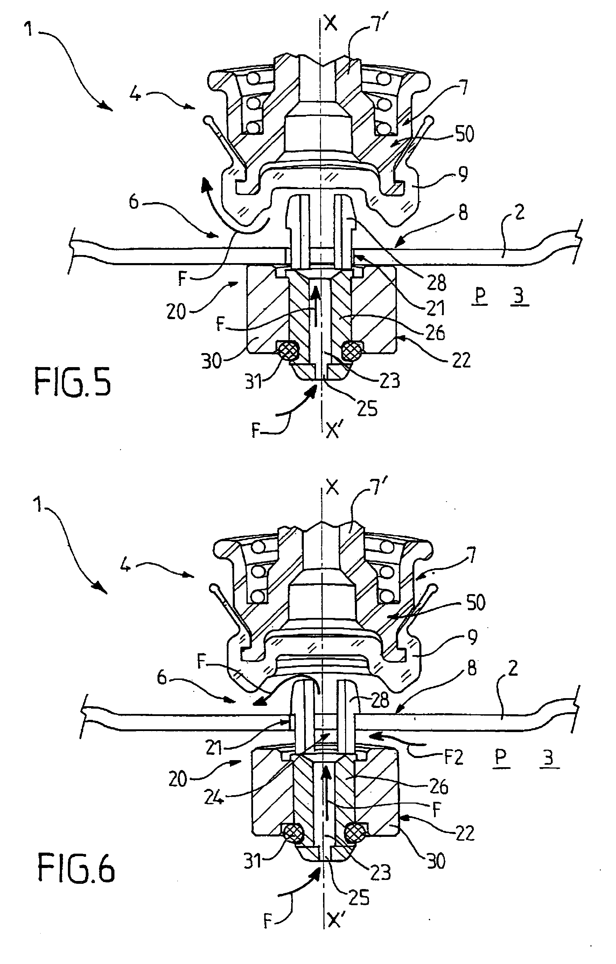

Selon l'invention, l'appareil 1 comprend un moyen de décompression 4 activable qui est conçu pour, lorsqu'il est activé, notamment en fin de cuisson, adopter une configuration d'ouverture, telle que représentée sur les figures 5, 6, 10, 11, 14, 16 et 17, dans laquelle il assure la communication entre l'intérieur de l'enceinte 3 et l'extérieur 5 de l'appareil, à travers un circuit d'échappement 6, et ce pour permettre la décompression dudit appareil 1.

Plus particulièrement, le moyen de décompression 4 peut comporter un clapet 7 monté mobile par rapport à un siège 8 de telle sorte que le moyen de décompression 4 peut occuper alternativement une configuration de fermeture, dans laquelle le clapet 7 obture de manière étanche le siège 8 et permet le maintien d'une pression fonctionnelle de cuisson à l'intérieur de l'enceinte 3, et une configuration d'ouverture dans laquelle le clapet 7 est éloigné du siège 8 de sorte à autoriser le passage du flux gazeux F issu de l'enceinte 3.

De préférence, le clapet 7 est pourvu d'une garniture d'étanchéité du genre joint souple 9, qui comporte de préférence une lèvre annulaire destinée à venir en appui étanche contre le siège 8.

En outre, l'appareil de cuisson 1 comprend un moyen de commande 10 conçu pour être actionné par l'utilisateur afin de contrôler l'activation du moyen de décompression 4.

Au sens de l'invention, le moyen de commande 10 permet à l'utilisateur de provoquer et de contrôler lui-même le déclenchement de la décompression, c'est-à-dire d'enclencher le processus de purge de l'enceinte de cuisson afin d'évacuer la vapeur d'eau qui se trouve en surpression par rapport à la pression atmosphérique.

Par « *contrôler l'activation du moyen de décompression* » on indique que le moyen de commande 10 conforme à l'invention est conçu pour passer alternativement d'un état de blocage, dans lequel il maintien le moyen de décompression 4 en configuration de fermeture, par exemple en faisant obstacle au déplacement du clapet 7 par rapport à son siège 8, et un état de libération dans lequel soit il provoque activement l'ouverture du moyen de décompression, par exemple en tirant sur le clapet 7 pour le déplacer, soit il autorise simplement, de manière passive, ledit moyen de décompression 4 à se placer en configuration d'ouverture, par exemple à se déplacer de lui-même sous l'effet de la pression régnant dans l'enceinte 3.

En d'autres termes, il est envisageable que le moyen de commande 10 exerce soit un contrôle actif, soit un contrôle passif du moyen de décompression 4 se trouvant sous sa dépendance. En revanche, ledit moyen de commande 10 est avantageusement contrôlé par l'utilisateur, et le déclenchement de la purge subordonné à une action volontaire dudit l'utilisateur.

Bien entendu, le moyen de commande 10 n'est nullement limité à une forme de réalisation particulière et pourra notamment comprendre tout type de mécanisme mécanique, pneumatique, électromagnétique etc. apte à provoquer ou autoriser l'ouverture du moyen de décompression 4, et notamment tout système de bouton poussoir, de tirant, de levier, ou de came apte à manoeuvrer le clapet 7 en retrait du siège 8.

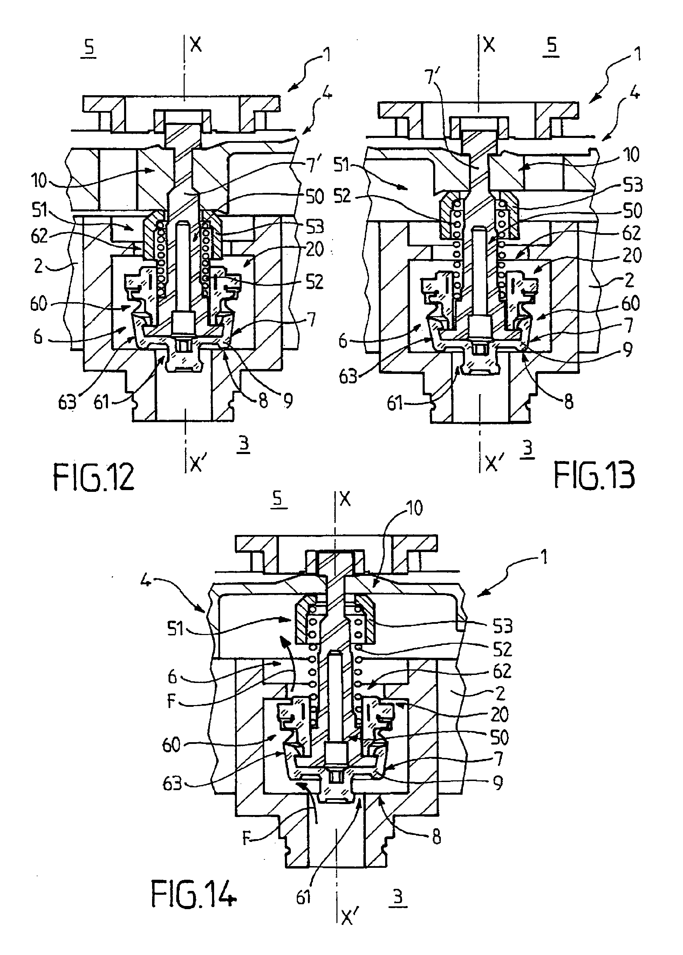

Selon une variante de réalisation préférentielle, tel que cela est illustré sur les figures 12 à 17, le moyen de commande 10 comprendra un disque rotatif monté sensiblement horizontalement et parallèlement au couvercle 2, avantageusement mû par une poignée faisant saillie sur le dessus de l'appareil 1, et comportant une ou plusieurs rampes aptes à exercer une traction ou une compression sur la queue du clapet 7, selon la position angulaire occupée par le disque vis-à-vis du couvercle.

Selon une caractéristique importante de l'invention, l'appareil 1 comporte un moyen de régulation de débit de fuite 20 qui est conçu pour coopérer avec le moyen de décompression 4, lorsque ce dernier se trouve en configuration d'ouverture, afin d'augmenter automatiquement la capacité d'écoulement du circuit d'échappement 6 lorsque la pression P régnant dans l'enceinte 3 décroît.

Avantageusement, la mise en oeuvre d'un moyen de régulation de débit de fuite 20 permet de contrôler à tout moment, entre le déclenchement de la décompression et la fin de ladite décompression, les conditions dans lesquelles s'opère cette décompression, et plus particulièrement le débit de flux gazeux F qui s'échappe de l'enceinte à travers le circuit d'échappement 6 en traversant le couvercle 2 et le moyen de régulation 20.

La régulation du débit de fuite, une fois la décompression enclenchée, s'effectue avantageusement de manière automatique, sans intervention nécessaire de l'utilisateur, l'appareil 1 étant capable d'asservir lui-même, de préférence sensiblement en temps réel, la capacité d'écoulement de son circuit d'échappement 6 aux conditions de pression régnant dans l'enceinte 3.

Par « *l'augmentation de la capacité d'écoulement du circuit d'échappement 6* », on désigne la réduction de la résistance qu'oppose ledit circuit d'échappement 6, et plus particulièrement le moyen de décompression 4 et/ou le moyen de régulation de débit de fuite 20, à l'écoulement du flux gazeux F issu de l'enceinte.

De préférence, cette augmentation de capacité d'écoulement est globalement continue au cours du temps, voire proportionnelle à la diminution de la pression P, pendant la phase de décompression et de préférence au moins au début de ladite phase de décompression.

Toutefois, tout autre type d'asservissement du moyen de régulation de débit de fuite 20 en fonction de la pression P régnant dans l'enceinte 3 peut être envisagé.

Ainsi, il n'est pas exclu que l'augmentation de la capacité d'écoulement puisse par exemple s'opérer par paliers successifs, ou connaître de légers reculs par morceaux, tout en conservant une tendance globalement croissante au fur et à mesure que la pression résiduelle diminue.

En outre, les moyens permettant de modifier la capacité d'écoulement du circuit d'échappement 6 ne sont nullement limités à une forme de réalisation spécifique.

En particulier, il est envisageable de faire varier le profil, la longueur ou de préférence la section transverse de passage d'au moins un tronçon du circuit d'échappement 6.

De préférence, le moyen de régulation de débit de fuite 20 est apte à modifier la section de passage du circuit d'échappement 6 en la faisant varier entre une première section minimale et une seconde section plus étendue que la première.

De préférence, le moyen de régulation de débit de fuite 20 est conçu pour maintenir au moins une première section minimale de superficie non nulle lorsque le moyen de décompression 4 se trouve en configuration d'ouverture, afin de garantir la décompression effective de l'enceinte 3 lorsque le moyen de décompression 4 est activé.

En outre, la seconde section est de préférence au moins deux fois plus étendue, de façon préférentielle au moins quatre fois plus étendue, voire six fois à huit fois plus étendue que la première section.

Ainsi, le moyen de régulation de débit de fuite 20 permet de réaliser un étranglement plus ou moins marqué du circuit d'échappement 6, et plus particulièrement de la section transverse la plus étroite dudit circuit d'échappement 6, au cours du cycle de décompression.

Avantageusement, il permet d'agrandir la superficie de la section transverse dudit circuit d'échappement 6 au fur et à mesure que la pression P décroît.

Il peut notamment faire varier, soit par paliers, soit continûment, la superficie de ladite section transverse pour la faire passer d'une première section de petites dimensions à une seconde section dont la superficie aura été augmentée dans des proportions sensiblement comprises entre 2 et 8.

A titre d'exemple, la première section pourra présenter une superficie sensiblement comprise entre 0 mm² et 4 mm², et la seconde section d'une superficie sensiblement comprise entre 10 mm² et 30 mm².

Avantageusement, le moyen de régulation du débit de fuite 20 conforme à l'invention est agencé pour que l'évolution de la capacité d'écoulement du circuit d'échappement 6 soit inverse de celle de la pression résiduelle régnant dans l'enceinte 3, c'est-à-dire de l'évolution du gradient de pression existant entre l'enceinte 3 et l'extérieur 5, contrairement à ce que l'on observe sur les autocuiseurs de l'art antérieur dans lesquels la soupape d'échappement est soit maintenue en position fixe pendant la décompression en maintenant une capacité d'écoulement sensiblement constante, ou soit se referme au fur et à mesure que la pression de l'enceinte décroît en réduisant ainsi progressivement la capacité d'écoulement.

De préférence, le moyen de régulation de débit de fuite 20 sera conçu pour au moins maintenir, et de façon particulièrement préférentielle pour accélérer sensiblement, la vitesse de décompression V de l'appareil au fur et à mesure que la pression P régnant dans l'enceinte 3 diminue.

Par « *vitesse de décompression* », on désigne la variation, et plus particulièrement la diminution, de la pression P par unité de temps, c'est-à-dire la réduction du gradient de pression entre l'intérieur de l'enceinte 3 et l'extérieur 5 en fonction du temps, lors de la phase de décompression. Cette vitesse de décompression est exprimée en kPa/s.

En d'autres termes, l'ouverture progressive de la section de passage du circuit d'échappement 6 permet au moins de compenser sensiblement la réduction de débit de fuite liée à la diminution progressive du gradient de pression entre la pression P interne de l'appareil et la pression atmosphérique externe, sinon de provoquer une augmentation dudit débit de fuite malgré cette diminution du gradient de pression, contrairement à ce que l'on observe dans les appareils de cuisson connus.

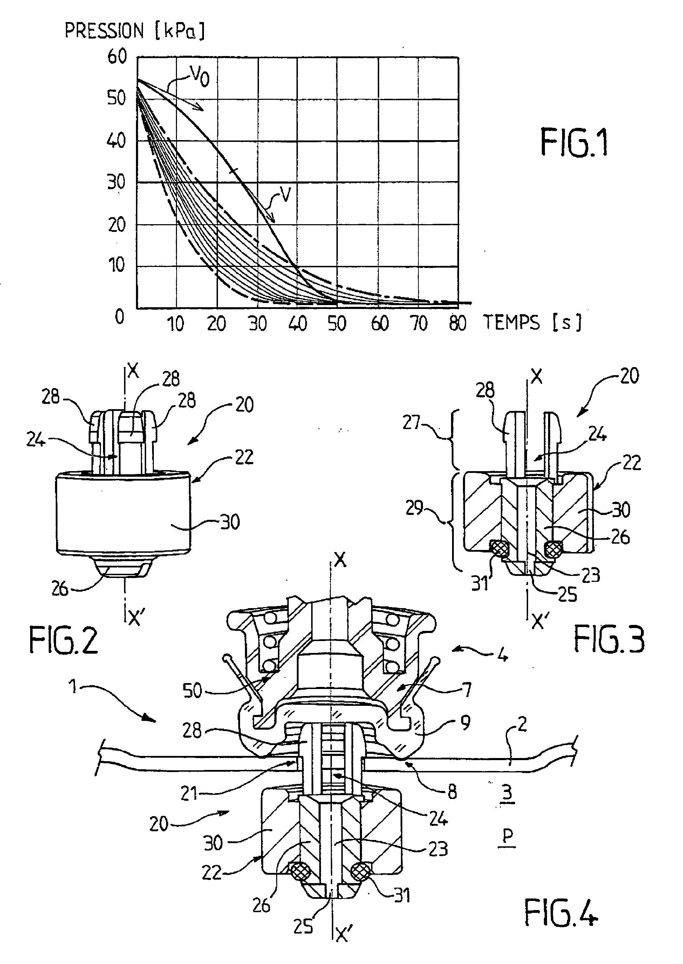

Graphiquement, tel que cela est illustré sur la figure 1, ceci permet de conférer à la courbe de décompression d'un appareil conforme à l'invention, représentée en trait plein, une courbure d'aspect globalement concave, par opposition aux courbes de décompression des autocuiseurs connus, représentées en traits pointillés et mixtes, qui présentent une courbure globalement convexe.

De préférence, le moyen de régulation de débit de fuite 20 est conçu pour contrôler la vitesse de décompression V et la maintenir sensiblement dans une plage de valeurs prédéterminée, dont la limite supérieure est telle que le phénomène d'émulsion est évité, au moins pour la plupart des aliments courants, et la limite inférieure telle que la durée totale de la décompression reste modérée, et notamment sensiblement voisine des plus faibles durées habituellement constatées dans les autocuiseurs connus.

Ainsi, le moyen de régulation de débit de fuite 20 pourra être conçu pour maintenir la vitesse de décompression V supérieure ou égale à 0,3 kPa/s, de préférence supérieure ou égale à 0,6 kPa /s, et inférieure ou égale à 1,6 kPa/s, voire inférieure ou égale à 1 kPa/s, voire, de façon particulièrement préférentielle, sensiblement entre 0,6 kPa/s et 1,6 kPa/s, au moins tant que ladite vitesse de décompression est susceptible d'être maintenue par la présence d'un gradient de pression moteur suffisant.

Bien entendu, l'homme du métier sera à même d'adapter le moyen de régulation du débit de fuite 20 selon la capacité (contenance) de l'appareil 1, la pression fonctionnelle de ce dernier, ou encore la charge en eau susceptible d'être utilisée, en prenant notamment en considération le fait que plus le volume d'eau liquide est important, plus celle-ci génère de vapeur lors de la décompression, ce qui tend à augmenter la masse totale de gaz à évacuer pour permettre le retour à la pression atmosphérique.

A titre d'exemple, le moyen de régulation pourra être adapté pour maintenir une vitesse de décompression sensiblement supérieure ou égale à 0,3 kPa/s pour un appareil d'une contenance de 8 litres chargé de 6 litres d'eau et fonctionnant à 80 kPa.

En outre, le moyen de régulation de débit de fuite 20 sera de préférence conçu pour limiter la vitesse de décompression à l'origine V₀, lorsque le moyen de décompression est activé alors que l'enceinte 3 se trouve sous pression fonctionnelle, à une valeur sensiblement inférieure ou égale à 1 kPa/s, et de préférence inférieure ou égale à 0,6 kPa/s.

Avantageusement, le moyen de régulation de débit de fuite 20 forme ainsi un limiteur absolu, capable de définir une première section du circuit d'échappement 6 suffisamment restreinte pour éviter l'apparition d'un phénomène d'émulsion susceptible d'être à l'origine de la pulvérisation et de l'éjection de débris d'aliments à travers le circuit d'échappement 6.

De préférence, ce seuil de limitation s'applique également tant que la pression résiduelle est supérieure ou égale 40 kPa, voire supérieure ou égale à 50 kPa, et/ou tant que la surpression régnant dans l'enceinte n'a pas diminué d'au moins 10 %, voire d'au moins 20 % du niveau initial qu'elle atteignait au moment du déclenchement de la décompression.

Graphiquement, si l'on se rapporte à la figure 1, la vitesse de décompression à l'origine V₀ au début du régime établi de décompression correspond à la tangente à la courbe de décompression à l'instant t=0.

Selon une variante de réalisation, le moyen de régulation du débit de fuite 20 pourra être conçu pour augmenter la vitesse de décompression V de façon globalement continue, ou à tout le moins maintenir ladite vitesse de décompression V sensiblement supérieure ou égale à sa valeur d'origine V₀ au fur et à mesure que la pression régnant dans l'enceinte diminue, et plus particulièrement entre l'instant de l'activation du moyen de décompression, c'est-à-dire le moment du déclenchement de la phase de décompression, jusqu'à ce que la pression résiduelle P régnant dans l'enceinte 3 atteigne 20 kPa, de préférence 10 kPa, voire 5 kPa.

Plus particulièrement, l'augmentation de la section de passage du circuit d'échappement 6, et le maintien sinon la progression conséquente de la vitesse de décompression, se poursuivront de préférence tant que la surpression régnant dans l'enceinte n'aura pas diminué d'au moins 50 %, de préférence de 75 %, voire de 90 % par rapport à son niveau initial, c'est-à-dire correspondront de préférence à la majorité du cycle de décompression.

Avantageusement, l'agencement conforme à l'invention permet en outre de retarder au maximum la chute du débit de fuite utile, qui se traduit par l'inflexion de la courbe de décompression, bien entendu dans certaines limites imposées par construction, et notamment dans la limite de variabilité et d'ouverture maximale de la section de passage du circuit d'échappement 6.

Ainsi, la vitesse de décompression de l'appareil 1 conforme à l'invention ne diminue que tardivement, en fin de cycle de décompression, ce qui permet d'optimiser la durée dudit cycle de décompression en opérant la majorité, sinon la quasi-totalité de ladite décompression sensiblement à un débit de fuite rapide.

A ce titre, les inventeurs ont obtenu des données expérimentales qui leur ont permis de situer les autocuiseurs connus sensiblement entre la courbe représentée en trait mixte, laquelle correspond à un autocuiseur de l'art antérieur dont le moyen de décompression est dimensionné pour correspondre sensiblement au seuil de sécurité au-delà duquel risque de se produire un phénomène d'émulsion, et la courbe représentée en pointillés qui correspond à un autocuiseur à décompression rapide présentant un risque avéré d'émulsion pour certains aliments tendres.

On constate en comparant ces courbes que l'appareil 1 conforme à l'invention, en présentant une section d'échappement qui est faible lorsque la pression est élevée, et qui est forte à basse pression, permet d'ajuster dynamiquement le débit de fuite. Plus particulièrement, il régule automatiquement le débit de fuite de telle sorte que le gradient de température et de pression qu'il engendre au niveau de l'eau contenue dans les aliments reste inférieur à un seuil critique au-delà duquel cette eau entrerait en ébullition et provoquerait la pulvérisation desdits aliments. Ainsi, en régulant la perte d'énergie que subit l'eau contenue dans les aliments au fur et à mesure de la décompression, il permet de concilier une décompression rapide avec une absence de risque d'émulsion des aliments tendres.

L'agencement spécifique à l'invention permet donc à l'appareil 1 de combiner les avantages des appareils connus sans souffrir de leurs inconvénients, et ce, sans contraindre le concepteur ou l'utilisateur à réaliser des compromis insatisfaisants entre vitesse et sécurité de décompression.

En effet, graphiquement, on constate que la courbe de décompression de l'appareil conforme à l'invention s'écarte tout d'abord de la « *zone de danger* », dans laquelle une émulsion est susceptible d'apparaître, et contourne ladite zone de danger en « *replongeant* » par une accentuation de sa courbure, c'est-à-dire une accélération de la vitesse de décompression, lorsque la pression résiduelle P est descendue sous un seuil de sécurité prédéfini.

Avantageusement, le moyen de régulation du débit de fuite 20 pourra être conçu et asservi de sorte à maintenir un débit de fuite massique sensiblement constant au cours de la décompression.

A cet effet, conformément à la loi de Bernoulli, la loi d'accroissement de la section de passage du circuit d'échappement 6 en fonction de la pression P résiduelle, et plus particulièrement en fonction du gradient de pression entre l'enceinte et l'extérieur, pourra être sensiblement quadratique.

En d'autres termes, le moyen de régulation du débit de fuite 20 sera de préférence conçu pour faire varier la section de passage du circuit d'échappement 6 selon une loi sensiblement quadratique en fonction de la pression P.

Par ailleurs, de façon préférentielle, le moyen de décompression 4 et le moyen de régulation de débit de fuite 20 ont un fonctionnement réversible.

En d'autres termes, ceux-ci sont conçus pour être normalement réinitialisés, soit spontanément, soit par une action de réarmement spécifique exécutée par l'utilisateur au niveau du moyen de commande 10, de sorte à pouvoir remplir de nouveau leurs rôles respectifs au cours d'un nouveau cycle de cuisson et de décompression.

L'appareil 1 conforme à l'invention présente ainsi une bonne ergonomie, une grande simplicité d'utilisation, ainsi qu'un fonctionnement fiable, reproductible et intuitif.

De préférence, tel que cela est illustré sur les figures 4 à 6 d'une part et 7 à 11 d'autre part, le circuit d'échappement 6 présente un tronçon de régulation formant un palier 21, et le moyen de régulation de débit de fuite 20 comporte un tiroir 22 monté mobile sur ledit palier 21.

Avantageusement, le palier 21 peut être formé par un orifice percé dans le couvercle 2, éventuellement garni d'un support mécanique de type douille.

Avantageusement, le tiroir 22 est traversé par un canal 23 qui permet au flux gazeux F qui s'échappe de l'enceinte 3 de traverser le tronçon de régulation, ledit tiroir 22 étant en outre pourvu d'au moins un orifice d'admission réglable 24 qui permet l'entrée du flux gazeux F dans le canal 23 et qui est agencé de telle sorte que sa section varie selon la position relative du tiroir 22 et du palier 21.

Avantageusement, la section de passage du circuit d'échappement 6 peut ainsi être ajustée, et en particulier alternativement ouverte et refermée par le simple déplacement relatif du tiroir 22 dans le palier 21.

Un tel agencement permet de conférer au moyen de régulation de débit de fuite 20 une structure particulièrement simple, robuste, fiable et peu encombrante.

De surcroît, le tiroir 22 comprend de préférence au moins un orifice d'admission permanent 25 dont la section d'ouverture est sensiblement invariante, et non nulle, quelle que soit la position relative du tiroir 22 par rapport au palier 21.

Ainsi, le moyen de régulation de débit de fuite 20 conforme à l'invention comporte avantageusement un orifice d'admission permanent 25 formant un orifice d'admission primaire, de préférence agencé pour autoriser un débit minimal de fuite lors de l'activation du moyen de décompression 4, et ce quel que soit l'état de l'orifice d'admission réglable 24, ledit orifice d'admission réglable 24 formant un orifice d'admission secondaire susceptible de s'ajouter à l'orifice primaire et communiquant avec le même canal collecteur 23, de sorte à permettre le réglage, et notamment l'augmentation, de la section globale de passage du circuit d'échappement 6 au niveau du tronçon de régulation.

De préférence, le tiroir 22 comporte un corps principal cylindrique 26, de préférence de base circulaire et de génératrice rectiligne, qui est monté dans le palier 21, à translation selon son axe générateur (XX'), et qui présente un ou plusieurs orifices d'admission réglables 24 sur sa paroi latérale, tel que cela est illustré sur les figures 2 à 6.

Avantageusement, le corps principal 26 peut ainsi alternativement faire saillie ou être au moins partiellement escamoté dans le palier 21, de telle sorte que ce dernier puisse alternativement découvrir ou recouvrir en tout ou partie l'au moins un orifice d'admission secondaire 24.

De préférence, l'axe générateur (XX') est orienté sensiblement selon la normale au couvercle 2, c'est-à-dire sensiblement verticalement lorsque l'appareil 1 est en position d'utilisation.

Bien entendu, l'agencement du tiroir 22 n'est nullement limité à un coulisseau, et il est envisageable que celui-ci puisse présenter une mobilité fonctionnelle, par rapport au palier 21, de type rotation autour de son axe générateur, et/ou combinaison de translation et de rotation, telle que pivot glissant.

De préférence, le tiroir 22 est formé par assemblage d'un corps principal 26 qui présente un premier tronçon 27 destiné à être enfilé dans le palier 21 et pourvu de moyens de retenue 28, du genre griffes ou collerette, destinés à venir en prise avec le palier 21 afin d'empêcher l'extraction du tiroir 22 hors dudit palier, ainsi qu'un second tronçon 29 opposé, et, d'autre part, d'une butée 30 rapportée, telle qu'une bague, qui est fixée sur ledit second tronçon 29, sensiblement à l'opposé des moyens de retenue 28, de sorte à empêcher la séparation complète du palier et du tiroir, une fois ce dernier assemblé, tout en autorisant leur débattement relatif.

Avantageusement, le diamètre du second tronçon 29 est inférieur au diamètre de l'évidement du palier 21, de telle sorte que le corps principal 26 peut être inséré dans le palier par le second tronçon 29, puis enfoncé dans ce dernier jusqu'à ce que ledit second tronçon 29 émerge de l'autre côté du palier, en étant retenu par les moyens de retenue 28 qui forment un épaulement venant prendre appui sur le bord opposé dudit palier 21.

L'assemblage est ensuite achevé en enfilant la bague 30 sur le second tronçon 29, avantageusement à partir du côté opposé du couvercle 2, dans le sens opposé à celui de l'introduction du corps principal dans le palier, puis en assurant la jonction mécanique entre la bague et le corps principal, par exemple au moyen d'un joint torique 31 qui empêche la chute verticale, et plus généralement l'extraction, de ladite bague 30 hors du corps principal 26.

Selon une variante de réalisation particulièrement préférentielle correspondant aux figures 2 à 6, le canal 23 est étagé de sorte à présenter une portion de section transverse réduite qui communique avec l'orifice d'admission primaire permanent 25, puis une portion de section transverse élargie, plus importante que la précédente, qui communique avec le ou les orifices d'admission secondaires réglables 24.

De préférence, cet étagement correspond sensiblement à celui des premier et second tronçons 27, 29, la portion de section réduite du canal 23 étant percée dans le second tronçon 29. Avantageusement, ledit canal étagé est sensiblement parallèle à l'axe générateur (XX') et de préférence centré sur celui-ci.

En outre, les orifices d'admission réglables 24 sont de préférence réalisés par une ou plusieurs rainures longitudinales, sensiblement parallèles à l'axe générateur (XX') qui fendent le premier tronçon 27 et s'ouvrent à l'extrémité correspondante du corps principal 26.

Avantageusement, le corps principal 26 peut ainsi présenter une pluralité de pattes de retenue 28, et plus particulièrement être subdivisé en quatre pattes de retenue équiréparties, lesquelles résultent de la découpe d'un premier tronçon 27 qui présente une extrémité épaulée, de préférence tronconique, dont le diamètre extérieur de base est supérieur à celui du diamètre du palier 21.

Cet agencement permet avantageusement de réaliser un moyen de régulation de débit de fuite 20 à l'aide d'un organe particulièrement simple, peu coûteux à fabriquer et facile à assembler.

En outre, un tel moyen de régulation présente l'avantage de se positionner automatiquement dans la configuration adaptée à la régulation, lors de la décompression, en fonction d'une part de la pression P régnant dans l'enceinte 3, et d'autre part de la force de rappel avantageusement exercée par son propre poids.

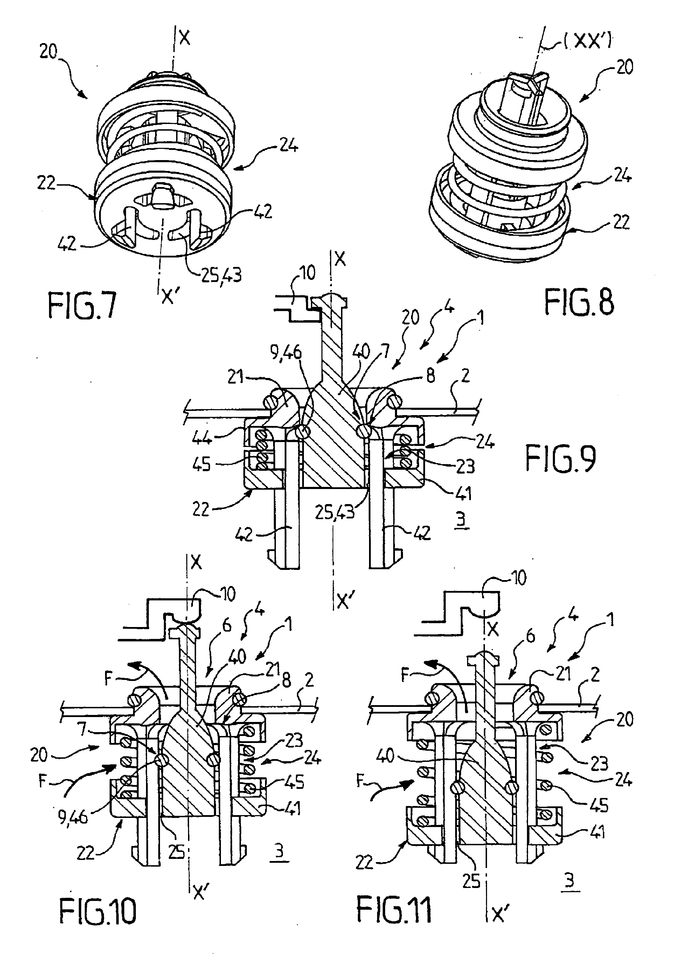

Selon une caractéristique préférentielle de l'invention, que l'on retrouve notamment sur les variantes de réalisation illustrées aux figures 7 à 11 d'une part et 15 à 17 d'autre part, le moyen de régulation de débit de fuite 20 comporte un noyau évasé 40 qui est monté axialement mobile par rapport à une portion du circuit d'échappement 6 de sorte à pouvoir modifier la section de passage comprise entre la paroi latérale externe dudit noyau 40 et la paroi interne correspondante de la portion du circuit d'échappement, selon le taux de pénétration dudit noyau dans ladite portion.

Plus particulièrement, la section transverse variable du noyau 40 peut conférer à ce dernier une forme de cône ou d'ogive, éventuellement tronqué(e), et dont la pointe est orientée vers la portion considérée du canal d'échappement 6.

Avantageusement, la portion considérée du circuit d'échappement 6 correspond à un épaulement ou un rétrécissement de section formant une sorte de bouche en vis-à-vis de laquelle le noyau peut évoluer, et notamment dans laquelle le noyau peut pénétrer.

Avantageusement, le profil évasé du noyau 40 pourra être déterminé de telle sorte que l'enfoncement linéaire dudit noyau dans le circuit d'échappement se traduit par une variation quadratique de la section de passage résiduelle dudit circuit d'échappement 6.

Selon la variante de réalisation correspondant aux figures 7 à 11, le noyau 40 est logé dans un fût 41 dont il est solidaire, ledit fût étant monté et avantageusement guidé à translation selon l'axe longitudinal (XX') de déplacement du noyau par rapport au palier 21 .

A cet effet, le palier peut comporter une ou plusieurs tiges de guidage 42 coopérant avec des lumières 43 traversant la base du fût 41.

De préférence, le palier 21 comporte une embase 44 dont le diamètre correspond sensiblement à celui du fût 41, de telle sorte que ce dernier peut venir en appui contre ladite embase lorsque le noyau 40 est engagé au maximum dans le palier 21.

Le moyen de régulation de débit de fuite 20 comporte de préférence un ressort de rappel 45 qui tend à éloigner le fût 41 du palier 21 en le repoussant le long des tiges de guidage 42, avantageusement à l'encontre de la force générée par la pression P. Avantageusement, la séparation du fût 41 et de l'embase 44 et leur éloignement relatif permet d'ouvrir et/ou d'agrandir un orifice d'admission réglable 24 sensiblement annulaire, qui correspond à la portion dégagée par l'éloignement du fût par rapport à l'embase, tout en augmentant simultanément la section de passage comprise entre le noyau 40 et le palier 21.

Selon une caractéristique préférentielle de l'invention qui est particulièrement adaptée à la variante de réalisation représentée sur les figures 7 à 11, le noyau 40 peut être pourvu d'un élément obturateur 46, tel qu'un joint torique logé dans une gorge annulaire creusée à la base de la section évasée dudit noyau 40, de sorte que, selon une caractéristique qui peut constituer une invention en tant que telle, le moyen de régulation de débit de fuite 20 puisse également assurer, à lui seul, la fonction du moyen de décompression 4, le noyau faisant avantageusement office de clapet 7 et l'élément obturateur 46 de garniture d'étanchéité 9.

A cet effet, le moyen de commande 10 pourra être pourvu d'une came ou d'une rampe aptes à agir sur le noyau 40, par exemple par l'intermédiaire d'une tige de manoeuvre, de sorte à venir plaquer l'élément obturateur 46 de façon étanche contre le palier 21 lorsque l'appareil se trouve en phase de cuisson, tel que cela est illustré sur la figure 9.

A l'inverse, le moyen de commande 10 pourra être pourvu d'un organe de déclenchement de décompression apte à manoeuvrer le noyau 40 dans le sens de son éloignement du palier 21, afin de provoquer le décollement de l'élément obturateur 46 et ainsi le passage du moyen de décompression en configuration d'ouverture, tel que cela est illustré sur la figure 10.

Par ailleurs, selon une caractéristique commune aux variantes des figures 4 à 6, 12 à 14, et 15 à 17, qui peut constituer une invention à part entière, le moyen de régulation de débit de fuite 20 est de préférence associé fonctionnellement à un organe de régulation de pression 50, du genre soupape, apte à réguler la pression fonctionnelle régnant dans l'enceinte 3.

Avantageusement, l'organe de régulation de pression 50 empêche la pression P régnant dans l'enceinte 3 de dépasser une valeur de consigne correspondant à la pression fonctionnelle de cuisson, laquelle peut éventuellement être choisie par l'utilisateur parmi une plage ou un groupe de valeurs prédéfinis par construction.

Par « *associé fonctionnellement* », on indique que le moyen de régulation de débit de fuite 20 interagit avec l'organe de régulation de pression 50, ledit organe de régulation de pression 50 étant susceptible d'influencer, de limiter, d'autoriser, voire de provoquer le fonctionnement desdits moyens de régulation de débit de fuite 20.

Selon une variante de réalisation préférentielle, l'organe de régulation de pression 50 constitue avantageusement un élément commun au moyen de décompression 4, et peut notamment être réalisé à l'aide du clapet 7 et du joint souple 9 qui coopèrent avec le siège 8 décrit dans ce qui précède.

A cet effet, l'organe de régulation de pression 50 sera de préférence associé à un moyen de tarage 51 réglable conçu pour placer alternativement ledit moyen de régulation de pression 50 dans une configuration de régulation de pression fonctionnelle d'une part et dans une configuration de décompression d'autre part.

Plus particulièrement, le moyen de tarage 51 peut comporter un ressort de réglage de pression 52 disposé entre d'une part une culasse mobile 53, dont la position, vis-à-vis du couvercle 2 et du siège 8, peut avantageusement être modifiée par le moyen de commande 10, et d'autre part une portion épaulée du corps 7' du clapet 7, tel que cela est notamment illustré sur les figures 12 à 17.

Ainsi, selon que le ressort 52 sera plus ou moins comprimé par la culasse mobile 53, il définira la force plus ou moins élevée avec laquelle le clapet 7 sera plaqué contre le siège 8, ladite force étant choisie pour compenser sensiblement les effets de la pression que la vapeur exerce sur la face opposée du clapet, et ce jusqu'au seuil de pression fonctionnelle P₁ déterminé pour la cuisson des aliments.

Bien entendu, il est envisageable de prévoir plusieurs positions possibles de la culasse mobile 53 correspondant à divers niveaux de pression fonctionnelle. Avantageusement, lorsque la culasse mobile 53 est placée totalement en retrait, le ressort de réglage de pression 52 est peu contraint, voire totalement relâché, ce qui place l'appareil en configuration de décompression. Plus particulièrement, le clapet 7 peut alors se déplacer à son encontre et adopter une configuration d'ouverture tant que la pression P régnant dans l'enceinte 3 est supérieure à la pression atmosphérique environnant l'appareil 1.

Selon une variante de réalisation correspondant aux figures 4 à 6, le clapet 7 peut être agencé pour venir coiffer le corps principal 26, et plus particulièrement la partie émergente du premier tronçon 27 présentant les moyens de retenue 28.

A cet effet, le joint souple 9 peut présenter un renfoncement de sorte à former une cloche apte à venir en appui contre le couvercle 2 au niveau du siège 8, tout en recouvrant la portion apparente du corps principal 26.

Ainsi, l'organe de régulation de pression 50 peut avantageusement être monté à l'aplomb du moyen de régulation de débit de fuite 20, et de façon sensiblement coaxiale à ce dernier, ce qui garantit notamment la compacité et la bonne réactivité du dispositif aussi bien pendant la régulation de la cuisson que lors de la phase de décompression.

Toutefois, selon une caractéristique préférentielle pouvant faire notamment l'objet des variantes de réalisation illustrées sur les figures 12 à 14 et 15 à 17, le moyen de régulation de débit de fuite 20 est intégré structurellement à l'organe de régulation de pression 50.

En d'autres termes, ceux-ci forment avantageusement un sous-ensemble en présentant des éléments communs, le moyen de régulation de débit de fuite 20 étant de préférence embarqué sur l'organe de régulation de pression 50 et son fonctionnement subordonné à la configuration de ce dernier.

Selon une variante de réalisation correspondant aux figures 12 à 14, et qui peut constituer une invention à part entière, le circuit d'échappement 6 de l'appareil 1 comprend une chambre intermédiaire 60 qui présente un orifice d'entrée 61 et un orifice de sortie 62 opposé, ainsi qu'un piston 63 logé dans ladite chambre et monté mobile entre lesdits orifices d'entrée et de sortie 61, 62.

Ledit appareil 1 comprend également un moyen de tarage 51 réglable apte à précontraindre ledit piston 63 vers l'orifice d'entrée 61, ledit moyen de tarage 51 étant conçu pour pouvoir adopter alternativement au moins une configuration de régulation de pression, telle qu'illustrée sur la figure 12, dans laquelle il précontraint ledit piston 63 de telle sorte que ce dernier vient en appui étanche contre l'orifice d'entrée 61 tant que la pression régnant dans l'enceinte est inférieure ou égale au seuil de pression fonctionnelle P₁ prédéterminé, afin que ledit piston 63 remplisse le rôle d'une soupape de régulation de pression, et une configuration de décompression, telle qu'illustrée sur la figure 14, dans laquelle la précontrainte exercée sur ledit piston 63 est moindre, et de préférence dans laquelle ledit piston 63 est tiré et maintenu en retrait de l'orifice d'entrée 61 par le moyen de commande 10, de telle sorte que ledit piston 63 peut d'une part s'écarter de l'orifice d'entrée 61 pour permettre l'échappement du flux gazeux F hors de l'enceinte 3 par ledit orifice d'entrée 61, et d'autre part être rapproché, sous l'effet de la pression dudit flux gazeux, de l'orifice de sortie 62 afin d'étrangler plus ou moins la section du circuit d'échappement et ainsi d'assurer la régulation du débit de fuite dudit flux gazeux F.

En d'autres termes, selon la configuration conférée au moyen de tarage 51, le piston 63 est alternativement plaqué contre l'orifice d'entrée 61 pour jouer le rôle d'une soupape de régulation de pression, ou laissé sensiblement flottant au sein de la chambre 60 de sorte à pouvoir assurer la décompression régulée de l'appareil 1.

Avantageusement, le piston 63 fait office de « *joint double effet* », sa face inférieure coopérant avec l'orifice d'entrée 61 formant un clapet d'ouverture pour la régulation ou la décompression, et sa face supérieure, de préférence plus étroite que sa face inférieure, coopérant avec l'orifice de sortie 62 formant un moyen de régulation de débit de fuite.

A cet effet, le piston 63 pourra avantageusement être formé par un clapet 7 en « T » enrobé par un joint souple 9 formant un manchon présentant lesdites faces inférieure et supérieure.

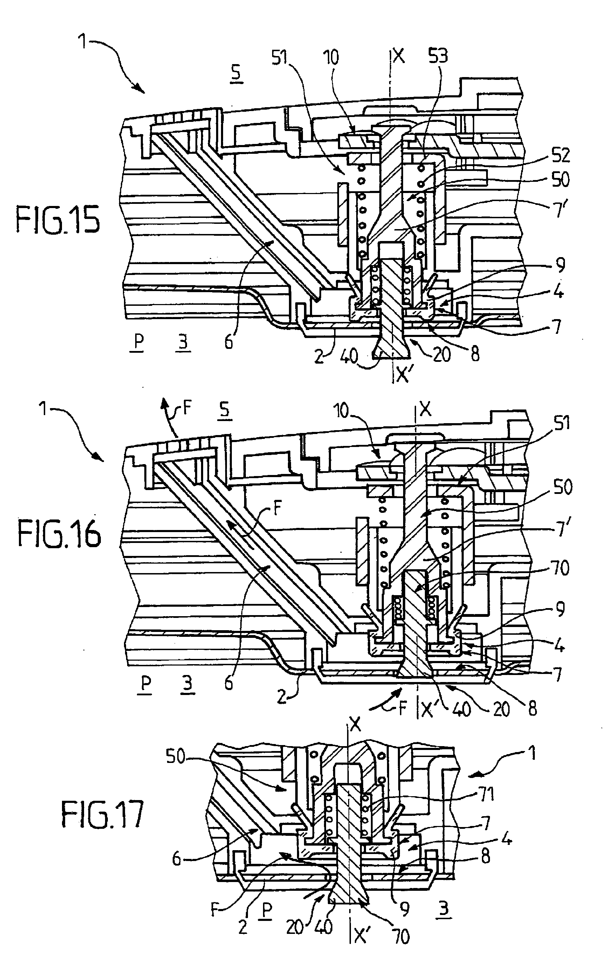

Selon une autre variante de réalisation correspondant aux figures 15 à 17, le moyen de régulation de débit de fuite 20 comporte une soupape différentielle 70 qui est montée mobile à translation sur la soupape principale de régulation de pression 50, de manière sensiblement coaxiale à cette dernière.

En d'autres termes, on peut avantageusement utiliser une soupape télescopique à double tige pour former simultanément le moyen de régulation de débit de fuite 20 et l'organe de régulation de pression 50.

Avantageusement, la soupape différentielle 70 sera montée à coulissement dans un logement ménagé à l'extrémité inférieure du corps 7' du clapet 7, lequel pourra également accueillir au besoin un ressort de rappel 71 dimensionné en fonction de la régulation de débit de fuite souhaitée.

De façon particulièrement avantageuse, la soupape différentielle 70 pourra présenter une forme de noyau évasé 40 tel que décrit précédemment.

Le sous-ensemble ainsi formé pourra donc comprendre une structure de régulation étagée, dont l'étage principal, qui comprend le clapet 7 et le moyen de tarage 51, assure alternativement le rôle d'organe de régulation de pression 50 et de moyen de décompression 4, tandis que le second étage, qui comprend la soupape différentielle 70 et le ressort de rappel 71, forme le moyen de régulation de débit de fuite 20, lorsque le premier étage se trouve en configuration de décompression.

Par ailleurs, il est envisageable de prévoir un moyen de commutation manuelle, de préférence associé au moyen de commande 10, qui permet à l'utilisateur de forcer, lorsque le moyen de décompression 4 se trouve en configuration d'ouverture, le moyen de régulation de débit de fuite 20 à définir une section de passage prédéterminée indépendamment de la pression P qui règne dans l'enceinte 3.

En d'autres termes, l'appareil 1 peut avantageusement comporter un moyen de forçage manuel temporaire, intégré au moyen de commande 10, pour accélérer la purge de l'enceinte, par exemple lorsque la pression a déjà sensiblement diminué et qu'il peut être utile, et sans risque, d'achever rapidement la décompression.

De préférence, un tel moyen de commutation manuelle est automatiquement rappelé vers la position de régulation, de telle sorte que l'appareil retrouve automatiquement sa capacité d'auto-régulation du débit de fuite lorsque l'utilisateur relâche son action sur le moyen de commutation manuelle. A titre d'exemple, un tel moyen peut comprendre un pointeau apte à coopérer, directement ou indirectement, avec le noyau 40 de sorte à écarter la base élargie de ce dernier du palier 21.

Bien entendu, la présente invention n'est nullement limitée aux variantes de réalisation décrites, et l'homme du métier sera à même d'apprécier d'autres agencements résultant notamment de la séparation ou de la combinaison des caractéristiques présentées dans ce qui précède.

Bien entendu, l'invention porte également sur un moyen de régulation de débit de fuite 20 tel que décrit plus haut, considéré en tant que sous-ensemble et pouvant être rapporté, éventuellement en association avec un moyen de régulation de pression, sur un appareil de cuisson 1 ou sur tout autre type de récipient sous pression, du genre autoclave.

Le fonctionnement d'un appareil de cuisson 1 conforme à l'invention va maintenant être décrit plus en détails en référence à la variante de réalisation illustrée sur les figures 4 à 6, le fonctionnement des autres variantes reposant sur un principe sensiblement analogue.

L'utilisateur place tout d'abord les aliments dans la cuve puis recouvre celle-ci avec le couvercle 2 qu'il verrouille de sorte à obtenir une enceinte 3 étanche.

Il place ensuite l'appareil 1 sur une source de chauffe de telle sorte que la pression augmente progressivement dans l'enceinte 3 jusqu'à atteindre la pression nominale P₁. Pendant cette phase de montée en pression puis de cuisson, l'appareil 1 se trouve dans la configuration représentée sur la figure 4, respectivement sur les figures 12 et 15 pour les autres variantes, dans laquelle le moyen de tarage 51 est réglé de sorte à plaquer le clapet 7, et plus précisément le joint souple 9 ajusté sur la partie terminale de ce dernier, contre le siège 8. La force exercée par le ressort de réglage 52 est suffisante pour empêcher ledit clapet 7 de se soulever tant que la pression P n'a pas atteint le seuil de pression fonctionnelle P₁.

Si la pression P régnant dans l'enceinte 3 dépasse ledit seuil P₁, le clapet 7 est repoussé par ladite pression à l'encontre du ressort de réglage 52, ce qui a pour effet de le séparer du siège 8, en ouvrant ainsi le circuit d'échappement 6. L'appareil 1 évacue ainsi d'éventuelles surpressions temporaires et maintient par conséquent pendant la cuisson une pression P sensiblement constante et égale à la pression de consigne P₁.

Une fois la cuisson des aliments achevée, l'utilisateur manoeuvre le moyen de commande 10 pour provoquer, ou à tout le moins autoriser, le passage du moyen de décompression en configuration d'ouverture.

Plus particulièrement, il peut actionner le moyen de commande 10, par exemple en faisant tourner la poignée correspondante, de sorte à modifier le réglage du moyen de tarage 51, et plus particulièrement éloigner la culasse mobile 53 de la partie active du clapet 7 et du siège 8, voire de préférence tirer sur la queue du clapet 7 afin de le placer en retrait du siège 8, et ainsi placer ledit clapet 7 en configuration de décompression.

Si le clapet 7 n'est plus suffisamment retenu par le ressort 52 ainsi relâché, celui-ci est repoussé sous l'effet de la pression régnant dans l'enceinte et s'écarte du siège 8. Ledit clapet peut également être directement contraint par le moyen de commande 10 à se séparer du siège 8, et à rester en retrait à une distance minimale de ce dernier.

On fait ainsi passer le moyen de décompression 4 dans sa configuration d'ouverture, tel que cela est illustré sur la figure 5, respectivement sur les figures 14 et 16. Sensiblement simultanément au passage du moyen de décompression 4 de sa configuration de fermeture à sa configuration d'ouverture, le moyen de régulation de débit de fuite 20 entre en action.

Plus particulièrement, sous l'effet de la pression régnant dans l'enceinte, le tiroir 22, libéré de la contrainte du clapet 7 qui le plaquait vers le bas, remonte spontanément vers le couvercle 2 jusqu'à ce que la bague 30 vienne buter sur la face inférieure dudit couvercle, tel que cela est illustré sur la figure 5.

Le seul orifice d'échappement disponible est alors l'orifice d'admission primaire 25. C'est donc dans celui-ci que le flux gazeux F s'engage pour remonter le canal 23, traverser le couvercle 2 et émerger du côté de la partie supérieure dudit couvercle, sous la cloche formée par le joint souple 9 qu'il contourne pour emprunter le reste du circuit d'échappement 6 avant d'être éjecté à l'extérieur de l'appareil 1.

Au tout début de cette phase de décompression, la vitesse de décompression à l'origine V₀ est ainsi avantageusement limitée spontanément, grâce à la limitation de la section passante du circuit d'échappement 6, laquelle correspond au calibrage pré-réglé de l'orifice d'admission primaire 25. On évite ainsi le phénomène d'émulsion.

Au fur et à mesure que la pression P décroît, le tiroir 22 est progressivement rappelé vers le bas, avantageusement sous l'effet de son propre poids, ce qui a pour effet de faire apparaître puis d'agrandir les orifices d'admission secondaires 24 par lesquels un flux gazeux secondaire F₂ s'engage dans la portion élargie du canal 23.

En augmentant ainsi la section minimale de passage du circuit d'échappement 6, on compense l'effet de la baisse de pression, au point non seulement de conserver, mais d'accélérer la vitesse de décompression, tel que cela est illustré sur la figure 1.

De manière analogue, il est remarquable, en ce qui concerne la variante de réalisation correspondant à la figure 14, que plus la pression régnant dans l'enceinte est forte, plus le piston 63 est repoussé contre l'orifice de sortie 62, et par conséquent plus la section de passage du circuit d'échappement 6 est réduite. A l'inverse, lorsque la pression régnant dans l'enceinte diminue, le piston 63 est repoussé par le ressort 52 vers une position plus centrale dans la chambre 60, ce qui a pour effet d'élargir la section de passage comprise entre la partie supérieure dudit piston 63 d'une part et l'orifice de sortie 62 d'autre part.

Lorsque la pression P est insuffisante pour contrer le poids du tiroir 22, celui-ci se retrouve en position de repos, librement suspendu au couvercle 2 par ses moyens de retenue 28, tel que cela est illustré sur la figure 6. L'ouverture des orifices d'admission secondaires 24, et par conséquent l'étendue de la section de passage du circuit d'échappement 6 est alors maximale.

La décompression étant achevée, il est possible de déverrouiller et de retirer le couvercle pour récupérer les aliments.

Avantageusement, l'organe de régulation de débit de fuite étant retourné dans son état initial, il suffit de manoeuvrer le moyen de commande 10 pour replacer le clapet 7 dans sa configuration de régulation et débuter un nouveau cycle de cuisson.

Ainsi, l'appareil 1 conforme à l'invention, et plus particulièrement son moyen de régulation de débit de fuite 20 permettent de piloter très finement la décompression et d'optimiser celle-ci à la fois en termes de rapidité, de sûreté vis-à-vis de l'utilisateur, et de propreté.

En outre, l'agencement particulièrement compact et simple, voire modulaire, de l'invention permet d'adapter facilement celle-ci à tout type d'autocuiseur tout en limitant le coût de fabrication et en conservant la simplicité des opérations d'assemblage.

## Revendications

1. Appareil de cuisson (1) d'aliments sous pression comprenant une cuve ainsi qu'un couvercle (2) conçu pour être fixé sur ladite cuve de sorte à définir une enceinte de cuisson (3) destinée à contenir les aliments, ledit appareil comprenant :
- un moyen de décompression (4) activable conçu pour, lorsqu'il est activé, adopter une configuration d'ouverture dans laquelle il assure la communication entre l'intérieur de l'enceinte (3) et l'extérieur (5) de l'appareil à travers un circuit d'échappement (6) pour permettre la décompression dudit appareil (1),
- un moyen de commande conçu pour être actionné par l'utilisateur afin de contrôler l'activation du moyen de décompression (4),
ledit appareil (1) étant **caractérisé en ce qu'**il comporte un moyen de régulation de débit de fuite (20) conçu pour coopérer avec le moyen de décompression (4), lorsque ce dernier se trouve en configuration d'ouverture, afin d'augmenter automatiquement la capacité d'écoulement du circuit d'échappement (6) lorsque la pression (P) régnant dans l'enceinte (3) décroît.

2. Appareil de cuisson selon la revendication 1 **caractérisé en ce que** le moyen de régulation de débit de fuite (20) est conçu pour accélérer sensiblement la vitesse de décompression (V) de l'appareil ou maintenir ladite vitesse de décompression (V) sensiblement supérieure ou égale à sa valeur d'origine (V₀) au fur et à mesure que la pression (P) régnant dans l'enceinte (3) diminue.

3. Appareil de cuisson selon la revendication 1 ou 2 **caractérisé en ce que** le moyen de régulation de débit de fuite (20) est conçu pour limiter la vitesse de décompression à l'origine (V₀), lorsque le moyen de décompression (4) est activé alors que l'enceinte (3) se trouve sous pression fonctionnelle, à une valeur sensiblement inférieure ou égale à 1 kPa / s, et de préférence inférieure ou égale à 0,6 kPa / s.

4. Appareil de cuisson selon l'une des revendications 1 à 3 **caractérisé en ce que** le moyen de régulation du débit de fuite (20) est conçu pour faire varier la section de passage du circuit d'échappement (6) selon une loi sensiblement quadratique en fonction de la pression (P) régnant dans l'enceinte.

5. Appareil de cuisson selon l'une des revendications précédentes **caractérisé en ce que** le moyen de décompression (4) et le moyen de régulation de débit de fuite (20) ont un fonctionnement réversible.

6. Appareil de cuisson selon l'une des revendications précédentes **caractérisé en ce que** le moyen de régulation de débit de fuite (20) est apte à modifier la section de passage du circuit d'échappement (6) en la faisant varier entre une première section minimale non nulle et une seconde section au moins deux fois plus étendue, de préférence au moins quatre fois plus étendue, voire au moins huit fois plus étendue que la première section.

7. Appareil de cuisson selon l'une des revendications précédentes **caractérisé en ce que** le circuit d'échappement (6) présente un tronçon de régulation formant un palier (21) et **en ce que** le moyen de régulation de débit de fuite (20) comporte un tiroir (22) monté mobile sur ledit palier, ledit tiroir étant traversé par un canal (23) permettant au flux gazeux (F) qui s'échappe de l'enceinte (3) de traverser le tronçon de régulation, ledit tiroir (22) étant pourvu d'au moins un orifice d'admission réglable (24) qui permet l'entrée du flux gazeux (F) dans le canal et qui est agencé de telle sorte que sa section varie selon la position relative du tiroir (22) et du palier (21).

8. Appareil de cuisson selon la revendication 7 **caractérisé en ce que** le tiroir (22) comprend au moins un orifice d'admission permanent (25) dont la section d'ouverture est sensiblement invariante quelle que soit la position relative du tiroir (22) par rapport au palier (21).

9. Appareil de cuisson selon la revendication 7 ou 8 **caractérisé en ce que** le tiroir comporte un corps principal cylindrique (26) qui est monté dans le palier (21) à translation selon son axe générateur (XX') et qui présente un ou plusieurs orifices d'admission réglables (24) sur sa paroi latérale.

10. Appareil de cuisson selon l'une des revendications 7 à 9 **caractérisé en ce que** le tiroir (22) est formé par assemblage d'une part d'un corps principal (26) présentant un premier tronçon (27) destiné à être enfilé dans le palier (21) et pourvu de moyens de retenue, du genre griffes ou collerette, destinés à venir en prise avec le palier (21) afin d'empêcher l'extraction du tiroir (22) hors dudit palier, ainsi qu'un second tronçon (29) opposé, et, d'autre part, d'une butée (30) rapportée, telle qu'une bague, qui est fixée sur le second tronçon (29), sensiblement à l'opposé des moyens de retenue (28), de sorte à empêcher la séparation complète du palier et du tiroir, une fois ce dernier assemblé, tout en autorisant leur débattement relatif.

11. Appareil de cuisson selon l'une des revendications précédentes **caractérisé en ce que** le moyen de régulation de débit de fuite (20) comporte un noyau évasé (40) monté axialement mobile par rapport à une portion du circuit d'échappement (6) de sorte à pouvoir modifier la section de passage comprise entre la paroi latérale externe du noyau (40) et la paroi interne de ladite portion du circuit d'échappement (6), selon le taux de pénétration dudit noyau dans ladite portion de circuit.

12. Appareil de cuisson selon l'une des revendications précédentes **caractérisé en ce que** le moyen de régulation de débit de fuite (20) est associé fonctionnellement à un organe de régulation de pression (50) apte à réguler la pression fonctionnelle régnant dans l'enceinte (3).

13. Appareil de cuisson selon la revendication 12 **caractérisé en ce que** le moyen de régulation de débit de fuite (20) est intégré structurellement à l'organe de régulation pression (50).

14. Appareil de cuisson selon la revendication 13 **caractérisé en ce qu'**il comprend une chambre intermédiaire (60) qui présente un orifice d'entrée (61) et un orifice de sortie (62) opposés, un piston (63) logé dans ladite chambre et monté mobile entre lesdits orifices d'entrée et de sortie, ainsi qu'un moyen de tarage (51) réglable apte à précontraindre ledit piston (63) vers l'orifice d'entrée (61) et conçu pour pouvoir adopter alternativement au moins une configuration de régulation de pression dans laquelle il précontraint le piston (63) de telle sorte que ce dernier vient en appui étanche contre l'orifice d'entrée (61) tant que la pression (P) régnant dans l'enceinte (3) est inférieure ou égale à un seuil de pression fonctionnelle (P1) prédéterminé, afin que ledit piston (63) remplisse le rôle d'une soupape de régulation de pression, et une configuration de décompression dans laquelle la précontrainte exercée sur ledit piston est moindre, de telle sorte que le piston (63) peut d'une part s'écarter de l'orifice d'entrée (61) pour permettre l'échappement du flux gazeux (F) hors de l'enceinte (3), et d'autre part se rapprocher de l'orifice de sortie (62) afin d'assurer la régulation du débit de fuite dudit flux gazeux (F).

15. Appareil de cuisson selon la revendication 13 **caractérisé en ce que** le moyen de régulation de débit de fuite (20) comporte une soupape différentielle (70) montée mobile à translation sur l'organe de régulation de pression, de manière sensiblement coaxiale à ce dernier.

16. Appareil selon l'une des revendications précédentes **caractérisé en ce qu'**il est pourvu d'un moyen de commutation manuelle permettant à l'utilisateur de forcer, lorsque le moyen de décompression (4) se trouve en configuration d'ouverture, le moyen de régulation de débit de fuite (20) à définir une section de passage prédéterminée, indépendamment de la pression (P) qui règne dans l'enceinte (3).

## Claims

1. A cooking appliance (1) for cooking food under pressure, the appliance comprising a vessel and a lid (2) designed to be fastened on said vessel so as to define a cooking enclosure (3) for containing the food, said appliance including:
activatable decompression means (4) designed, on being activated, to adopt an open configuration in which they provide communication between the inside of the enclosure (3) and the outside (5) of the appliance through an exhaust circuit (6) to enable said appliance (1) to be decompressed; and
control means designed to be actuated by the user in order to control activation of the decompression means (4);
said appliance (1) being **characterized in that** it includes leakage rate regulator means (20) designed to co-operate with the decompression means (4) when the decompression means are in the open configuration in order to increase automatically the flow rate capacity of the exhaust circuit (6) when the pressure (P) that exists inside the enclosure (3) decreases.

2. A cooking appliance according to claim 1, **characterized in that** the leakage rate regulator means (20) are designed to substantially accelerate the speed (V) of decompression of the appliance or to maintain said speed (V) of decompression substantially greater than or equal to its original value (V₀) as the pressure (P) that exists inside the enclosure (3) decreases.

3. A cooking appliance according to claim 1 or claim 2, **characterized in that** the leakage rate regulator means (20) are designed to limit the original speed (V₀) of decompression when the decompression means (4) are activated and the enclosure (3) is under its operating pressure, to a value that is substantially less than or equal to 1 kPa/s, and preferably less than or equal to 0.6 kPa/s.

4. A cooking appliance according to any one of claims 1 to 3, **characterized in that** the leakage rate regulator means (20) are designed to cause the flow section of the exhaust circuit (6) to vary in application of a substantially quadratic relationship as a function of the pressure (P) that exists inside the enclosure.

5. A cooking appliance according to any preceding claim, **characterized in that** the decompression means (4) and the leakage rate regulator means (20) are functionally reversible.

6. A cooking appliance according to any preceding claim, **characterized in that** the leakage rate regulator means (20) are suitable for modifying the flow section of the exhaust circuit (6) by causing it to vary between a minimum, non-zero, first section and a second section that is at least twice as large, preferably at least four times as large, or even at least eight times as large as the first section

7. A cooking appliance according to any preceding claim, **characterized in that** the exhaust circuit (6) presents a regulation segment forming a bearing (21), and **in that** the leakage rate regulator means (20) comprise a slider (22) mounted to move relative to said bearing, said slider having a channel (23) passing therethrough to enable a gas stream (F) escaping from the enclosure (3) to pass through the regulation segment, said slider (22) being provided with at least one adjustable admission orifice (24) that enables the gas stream (F) to enter into the channel and that is arranged in such a manner that its section varies depending on the relative position of the slider (22) and the bearing (21).

8. A cooking appliance according to claim 7, **characterized in that** the slider (22) includes at least one permanent admission orifice (25) of section that is substantially non-varying regardless of the relative position of the slider (22) and the bearing (21).

9. A cooking appliance according to claim 7 or claim 8, **characterized in that** the slider includes a cylindrical main body (26) that is mounted in the bearing (21) to move in translation along its generator axis (XX') and that presents one or more adjustable admission orifices (24) in its side wall.

10. A cooking appliance according to any one of claims 7 to 9, **characterized in that** the slider (22) is formed by assembling a main body (26) presenting both a first segment (27) that is to be inserted through the bearing (21) and that is provided with retaining means, such as claws or a collar, that engage with the bearing (21) in order to prevent the slider (22) from being extracted from said bearing, and an opposite, second segment (29), with a fitted abutment (30), such as a ring, that is fastened on the second segment (29) substantially opposite from the retaining means (28) so as to prevent the bearing and the slider separating completely once the slider has been assembled, while allowing them to move relative to each other.

11. A cooking appliance according to any preceding claim, **characterized in that** the leakage rate regulator means (20) comprise a flared core (40) mounted to move axially relative to a portion of the exhaust circuit (6) in such a manner as to be capable of modifying the flow section that exists between the outside wall of the core (40) and the inside wall of said portion of the exhaust circuit (6), depending on the extent to which said core penetrates into said circuit portion.

12. A cooking appliance according to any preceding claim, **characterized in that** the leakage rate regulator means (20) are functionally associated with a pressure regulator member (50) suitable for regulating the operating pressure that exists inside the enclosure (3).

13. A cooking appliance according to claim 12, **characterized in that** the leakage rate regulator means (20) are structurally integrated with the pressure regulator member (50).

14. A cooking appliance according to claim 13, **characterized in that** it includes an intermediate chamber (60) presenting an inlet orifice (61) and an opposite outlet orifice (62), a piston (63) housed in said chamber and mounted to move between said inlet and outlet orifices, and adjustable loading means (51) suitable for prestressing said piston (63) towards the inlet orifice (61) and designed to be able to adopt either at least one pressure regulation configuration in which it prestress the piston (63) in such a manner that said piston bears in leaktight manner against the inlet orifice (61) so long as the pressure (P) that exists inside the enclosure (3) is less than or equal to a predetermined operating pressure threshold (P₁) so that said piston (63) performs the function of a pressure regulation valve, and a decompression configuration in which the prestress exerted on said piston is less, such that the piston (63) can move away from the inlet orifice (61) to allow the gas stream (F) to escape from the enclosure (3) and can approach the outlet orifice (62) in order to regulate the leakage rate of said gas stream (F).

15. A cooking appliance according to claim 13, **characterized in that** the leakage rate regulator means (20) comprise a differential valve (70) mounted to move in translation on the pressure regulator member in substantially coaxial manner therewith.

16. An appliance according to any preceding claim, **characterized in that** it is provided with manual switch means enabling the user, when the decompression means (4) are in the open configuration, to force the leakage rate regulator means (20) to define a predetermined flow section independently of the pressure (P) that exists inside the enclosure (3).

## Patentansprüche

1. Dampfdruckkochgerät (1), das einen Behälter sowie einen Deckel (2) aufweist, der ausgelegt ist, um auf dem Behälter derart befestigt zu werden, dass ein Garraum (3) zur Aufnahme von Nahrungsmitteln definiert wird, wobei das Gerät aufweist:
- ein aktivierbares Druckablassmittel (4), das ausgelegt ist, um, wenn es aktiviert wird, eine Öffnungskonfiguration einzunehmen, in der es die Kommunikation zwischen dem Inneren des Raums (3) und dem Äußeren (5) des Geräts durch einen Auslasskreislauf (6) sicherstellt, um das Druckablassen des Geräts (1) zu ermöglichen,
- ein Steuermittel, das ausgelegt ist, um von dem Benutzer betätigt zu werden, um das Aktivieren des Druckablassmittels (4) zu steuern,
wobei das Gerät (1) **dadurch gekennzeichnet ist, dass** es ein Entweichungsratenregelmittel (20) aufweist, das ausgelegt ist, um mit dem Druckablassmittel (4) zusammenzuwirken, wenn sich Letzteres in Öffnungskonfiguration befindet, um automatisch die Abflusskapazität des Ablasskreislaufs (6) zu erhöhen, wenn der Druck (P), der in dem Inneren des Raums (3) herrscht, sinkt.

2. Dampfdruckkochgerät nach Anspruch 1, **dadurch gekennzeichnet, dass** das Entweichungsratenregelmittel (20) ausgelegt ist, um die Druckablassgeschwindigkeit (V) des Geräts deutlich zu beschleunigen oder die Druckablassgeschwindigkeit (V) im Wesentlichen größer oder gleich ihrem Ausgangswert (V₀) zu halten, während der Druck (P), der in dem Raum (3) herrscht, abnimmt.

3. Dampfdruckkochgerät nach Anspruch 1 oder 2, **dadurch gekennzeichnet, dass** das Entweichungsratenregelmittel (20) ausgelegt ist, um die ursprüngliche Druckablassgeschwindigkeit (V₀), wenn das Druckablassmittel (4) aktiviert wird, während sich der Raum (3) unter Betriebsdruck befindet, auf einen Wert zu beschränken, der im Wesentlichen kleiner oder gleich 1 kPa/s und vorzugsweise kleiner oder gleich 0,6 kPa/s ist.

4. Dampfdruckkochgerät nach einem der Ansprüche 1 bis 3, **dadurch gekennzeichnet, dass** das Entweichungsratenregelmittel (20) ausgelegt ist, um den Durchgangsquerschnitt des Ablasskreislaufs (6) gemäß einer im Wesentlichen quadratischen Abhängigkeit von dem in dem Raum herrschenden Druck (P) zu variieren.

5. Dampfdruckkochgerät nach einem der vorhergehenden Ansprüche, **dadurch gekennzeichnet, dass** das Druckablassmittel (4) und das Entweichungsratenregelmittel (20) eine umkehrbare Funktion aufweisen.

6. Dampfdruckkochgerät nach einem der vorhergehenden Ansprüche, **dadurch gekennzeichnet, dass** das Entweichungsratenregelmittel (20) ausgelegt ist, den Durchgangsquerschnitt des Ablasskreislaufs (6) dadurch zu ändern, dass es ihn zwischen einem ersten Mindestquerschnitt, der nicht gleich null ist, und einem zweiten Querschnitt variiert, der mindestens zweimal so groß ist, vorzugsweise mindestens viermal so groß, oder sogar achtmal so groß ist wie der erste Querschnitt.

7. Dampfdruckkochgerät nach einem der vorhergehenden Ansprüche, **dadurch gekennzeichnet, dass** der Ablasskreislauf (6) einen Regelabschnitt aufweist, der ein Lager (21) bildet, und dass das Entweichungsratenregelmittel (20) einen Schieber (22) aufweist, der auf dem Lager beweglich installiert ist, wobei der Schieber von einem Kanal (23) durchquert ist, der es dem Gasstrom (F), der aus dem Raum (3) austritt, erlaubt, den Regelabschnitt zu durchqueren, wobei der Schieber (22) mit wenigstens einer einstellbaren Einlassöffnung (24) versehen ist, die das Eintreten des Gasstroms (F) in den Kanal erlaubt, und die derart angeordnet ist, dass ihr Querschnitt in Abhängigkeit von der relativen Position des Schiebers (22) und des Lagers (21) variiert.

8. Dampfdruckkochgerät nach Anspruch 7, **dadurch gekennzeichnet, dass** der Schieber (22) wenigstens eine permanente Einlassöffnung (25) aufweist, deren Öffnungsquerschnitt im Wesentlichen ungeachtet der relativen Position des Schiebers (22) in Bezug zu dem Lager (21) unveränderlich ist.

9. Dampfdruckkochgerät nach Anspruch 7 oder 8, **dadurch gekennzeichnet, dass** der Schieber einen zylindrischen Hauptkörper (26) aufweist, der in dem Lager (21) in Translation entlang seiner Mantelachse (XX') angeordnet ist, und der eine oder mehrere einstellbare Einlassöffnungen (24) auf seiner Seitenwand aufweist.

10. Dampfdruckkochgerät nach einem der Ansprüche 7 bis 9, **dadurch gekennzeichnet, dass** der Schieber (22) gebildet ist durch Zusammensetzen einerseits eines Hauptkörpers (26), der einen ersten Abschnitt (27) aufweist, der dazu bestimmt ist, in das Lager (21) eingeführt zu werden und mit Rückhaltemitteln des Typs Klauen oder Kragen versehen ist, die dazu bestimmt sind, mit dem Lager (21) in Eingriff zu kommen, um das Herausziehen des Schiebers (22) aus dem Lager zu verhindern, sowie einen zweiten entgegengesetzten Abschnitt (29), und, andererseits, durch einen aufgesteckten Begrenzer (30), wie zum Beispiel ein Ring, der an den zweiten Abschnitt (29) im Wesentlichen den Rückhaltemitteln (28) gegenüberliegend derart befestigt ist, dass er eine vollständige Trennung des Lagers und des Schiebers, nachdem Letzterer aufgesteckt wurde, verhindert und gleichzeitig ihr relatives Ausschlagen erlaubt.

11. Dampfdruckkochgerät nach einem der vorhergehenden Ansprüche, **dadurch gekennzeichnet, dass** das Entweichungsratenregelmittel (20) einen aufgeweiteten Kern (40) aufweist, der axial beweglich in Bezug zu einem Abschnitt des Auslasskreislaufs (6) derart angebracht ist, dass er den Durchgangsquerschnitt, der zwischen der äußeren Seitenwand des Kerns (40) und der inneren Wand des Abschnitts des Auslasskreislaufs (6) liegt, gemäß der Eindringrate des Kerns in den Kreislaufabschnitt ändern kann.

12. Dampfdruckkochgerät nach einem der vorhergehenden Ansprüche, **dadurch gekennzeichnet, dass** das Entweichungsratenregelmittel (20) funktional mit einem Druckregelorgan (50), das geeignet ist, um den Betriebsdruck, der in dem Raum(3) herrscht, zu regeln, verbunden ist.

13. Dampfdruckkochgerät nach Anspruch 12, **dadurch gekennzeichnet, dass** das Entweichungsratenregelmittel (20) strukturell In das Druckregelorgan (50) integriert ist.

14. Dampfdruckkochgerät nach Anspruch 13, **dadurch gekennzeichnet, dass** es eine Zwischenkammer (60) aufweist, die eine Eingangsöffnung (61) und eine gegenüberliegende Ausgangsöffnung (62) aufweist, einen Kolben (63), der in der Kammer untergebracht und zwischen der Eingangsöffnung und der Ausgangsöffnung beweglich angeordnet ist, sowie ein einstellbares Tarierungsmittel (51), das den Kolben (63) zu der Eingangsöffnung (61) vorspannen kann und ausgelegt ist, um alternativ wenigstens eine Druckregelkonfiguration annehmen zu können, in der es den Kolben (63) derart vorspannt, dass Letzterer zur dichten Auflage gegen die Eingangsöffnung (61) kommt, solange der Druck (P), der in dem Raum (3) herrscht, kleiner oder gleich einem vorbestimmten Betriebsschwellendruck (P1) ist, damit der Kolben (63) die Aufgabe eines Druckregelventils erfüllt, und eine Druckablasskonfguration, in der die Vorspannung, die auf den Kolben ausgeübt wird, geringer ist, so dass sich der Kolben (63) einerseits von der Eingangsöffnung (61) entfernen kann, um das Austreten des Gasstroms (F) aus dem Raum (3) zu erlauben, und sich andererseits der Ausgangsöffnung (62) nähern kann, um die Regulierung der Entweichungsrate des Gasstroms (F) sicherzustellen.

15. Dampfdruckkochgerät nach Anspruch 13, **dadurch gekennzeichnet, dass** das Entweichungsratenregelmittel (20) ein Differenzventil (70) aufweist, das in Translation auf dem Druckregelorgan beweglich derart installiert ist, dass es zu Letzterem im Wesentlichen koaxial ist.

16. Dampfdruckkochgerät nach einem der vorhergehenden Ansprüche, **dadurch gekennzeichnet, dass** er mit einem manuellen Umschaltmittel versehen ist, das es dem Benutzer erlaubt, wenn sich das Druckablassmittel (4) in Öffnungskonfiguration befindet, das Entweichungsratenregelmittel (20) zu zwingen, einen vorbestimmten Durchgangsquerschnitt unabhängig von dem Druck (P), der in dem Raum (3) herrscht, zu definieren.
